# EUROPÄISCHE PATENTSCHRIFT

(11) **EP 0 298 200 B1**
(45) Veröffentlichungstag und Bekanntmachung des Hinweises auf die Patenterteilung: **02.08.1995**
(21) Anmeldenummer: 88104300.4
(22) Anmeldetag: 18.03.1988
(51) Int. Cl.: G03F 7/34, B29C 63/00

(54) **Vorrichtung und Verfahren zum Trennen von aneinander haftendem oder anliegendem Folienmaterial**
Process for the separation of attached or superposed foils
Procédé de séparation de feuilles tenant ensemble ou superposées

(30) Priorität: 06.07.1987 US 69912
(43) Veröffentlichungstag der Anmeldung: 11.01.1989
(73) Patentinhaber: HOECHST CELANESE CORPORATION, Somerville, N.J. 08876 (US)
(72) Erfinder: Platzer, Stephan J.W., Califon New Jersey 07830 (US)
(74) Vertreter: Zounek, Nikolai, Dipl.-Ing.

(56) Entgegenhaltungen:
- EP-A- 0 121 391
- EP-A- 0 236 730
- FR-A- 2 360 499

## Beschreibung

Die vorliegende Erfindung betrifft eine Vorrichtung und ein Verfahren zum Trennen von aneinander haftendem oder anliegendem Folienmaterial. Dabei geht es insbesondere um die sog. Abziehentwicklung (peel development) von lichtempfindlichen Materialien, die als Farbprüffolien und gedruckten Schaltungen verwendet werden können und die zum Beispiel aus einem Schichtträger, einer haftfähigen, bilderzeugenden Beschichtung und einer transparenten Folie bestehen.

Es sind zahlreiche lichtempfindliche Materialien bekannt, die nach dem Verfahren der Entwicklung durch Auseinanderziehen (peel apart) hergestellt werden. Bei der Herstellung von Farbprüffolien und gedruckten Schaltungen wird im allgemeinen zunächst ein Schichtträger mit einer haftfähigen, bilderzeugenden Mischung beschichtet. Auf die Beschichtung wird anschließend eine transparente Folie aufgebracht, so daß man einen Sandwichaufbau erhält. Dieser Aufbau wird dann durch eine Belichtungsmaske mit aktinischer Strahlung bildmäßig belichtet. Die Belichtung bewirkt eine bilderzeugende, unterschiedliche Haftung der lichtempfindlichen Schicht, so daß ein Teil der Schicht stärker an dem Schichtträger haftet, während ein anderer Teil bevorzugt an der transparenten Folie haftet. Werden transparente Folie und Schichtträger nun voneinander abgezogen, so bleibt zum Beispiel ein positiv es Bild auf dem Schichtträger zurück, und auf der transparenten Folie erscheint eine negative Wiedergabe.

Bei anderen Laminierverfahren beabsichtigt man eine Beschichtung vollständig von einer Oberfläche auf eine andere zu übertragen. Wenn zum Beispiel eine auf einem Schichtträger angeordnete farbige, harzartige Schicht auf ein Empfangsblatt übertragen werden soll, so wird der beschichtete Schichtträger im allgemeinen auf das Empfangsblatt aufgelegt und der entstandene Sandwichaufbau wird unter Anwendung von Druck durch den Walzenspalt eines beheizten Laminierwalzenpaares geführt. Schichtträger und Empfangsblatt werden dann auseinandergezogen und dabei zeigt sich, daß die farbige, harzartige Schicht von dem Schichtträger auf das Empfangsblatt übertragen wurde. Auf dem Gebiet der Schichtübertragung ist es bekannt, daß es eine Vielzahl von Anwendungsmöglichkeiten für solche Verfahren gibt, bei denen die übertragene Schicht gegebenenfalls lichtempfindlich oder farbig sein kann, Einfach- oder Mehrfachschichten verwendet werden und komplette Schichten oder differenzierte Bilder übertragen werden. Derartige Verfahren sind zum Beispiel in den US-Patentschriften Nos. 3 721 557, 3 671 236, 4 247 614, 2 409 564 und 3 307 950 beschrieben.

Bei Übertragungsverfahren durch Abziehen besteht u.a. das Problem einer unvollständigen Schichtübertragung, d.h. der größte Teil der Schicht oder des Bildes wird einwandfrei auf sein Empfangsblatt übertragen, aber es entstehen gewisse Leerstellen bzw. Fehler. Bei der Übertragung einer kompletten Schicht zeigt sich dieses Problem in einer Reihe von Löchern in der übertragenen Schicht. Bei der Bildübertragung von lichtempfindlichen Materialien kommt es durch den Schichtzusammenhalt zu einem Verlust an Bildlinienschärfe, oder es bleibt Bildmaterial an den Nichtbildstellen zurück bzw. fehlt an den Bildstellen.

Aus US-A 4 504 571 ist bekannt, inwieweit der Winkel von Bedeutung ist, unter dem die Schichten voneinander abgezogen werden und inwieweit dieser Winkel bei einer technisch erfolgreichen Schichtentrennung eine Rolle spielt. Diese Veröffentlichung schlägt einen Abziehwinkel im Bereich von 0° < a < 90 ° vor und lehrt, daß größere Abziehwinkel nicht angewendet werden sollen, wenn man Verformungen vermeiden will.

Es war Aufgabe der Erfindung das Problem der bekannten unvollständigen Trennung zu vermeiden und eine Vorrichtung sowie ein Trennverfahren zur Verfügung zu stellen, bei dem in einfacher Weise eine einwandfreie Trennung erfolgen kann.

Die Lösung dieser Aufgabe geht aus von einer Vorrichtung zum Trennen von aneinander haftendem oder anliegendem Folienmaterial durch Abziehen voneinander, bestehend aus einer, mindestens auf ihrer Oberfläche (12) elektrisch leitenden Grundplatte (10) und einer quer über dieser Oberfläche angeordneten, elektrisch leitenden Leiste (14), sowie Mitteln (16), mit denen die Leiste in ihrer Lage über der Oberfläche gehalten wird, wobei das Folienmaterial zwischen Leiste und Oberfläche geführt wird. In bevorzugter Ausführung sind die Grundplatte (10) mindestens an ihrer Oberfläche und die Leiste (14) geerdet. Die Grundplatte ist im wesentlichen eben ausgebildet. Die Leiste (14) ist keilförmig gestaltet und bildet mit der Oberfläche der Grundplatte (10) einen Winkel von unter 45 °. Mittel (16) zum Halten der Leiste (14) sind vorzugsweise Stäbe, die mit Schrauben und Federn versehen sein können, die durch die Grundplatte (10) hindurchgeführt sind und aus den Bohrungen der Leiste (14) senkrecht zur Oberfläche (12) herausragen.

Durch die erfindungsgemäße Vorrichtung wird ein einwandfreies Trennen des Folienmaterials, sowohl bei der Trennung in Positiv- und Negativ-Bild als auch bei der schichtweisen Trennung erzielt.

Die erfindungsgemäße Vorrichtung wird anhand der beigefügten Zeichnungen erläutert.

Es zeigen:
- Figur 1: eine Ausführung der erfindungsgemäßen Vorrichtung in Aufsicht, und
- Figur 2: ein Folienmaterial während des Auseinanderziehens mit Hilfe der erfindungsgemäßen Vorrichtung

Gegenstand der Erfindung ist ferner ein Verfahren zum Trennen von aneinander haftendem oder anliegendem Folienmaterial voneinander durch Führen des Folienmaterials durch einen Spalt, der von einer elektrisch leitenden Oberfläche einer Grundplatte und einer elektrisch leitenden Leiste gebildet wird, wobei beim Abziehen der Materialien voneinander gleichzeitig die während des Abziehschrittes erzeugte elektrostatische Aufladung durch Erden von Grundplatte und Leiste abgeleitet wird.

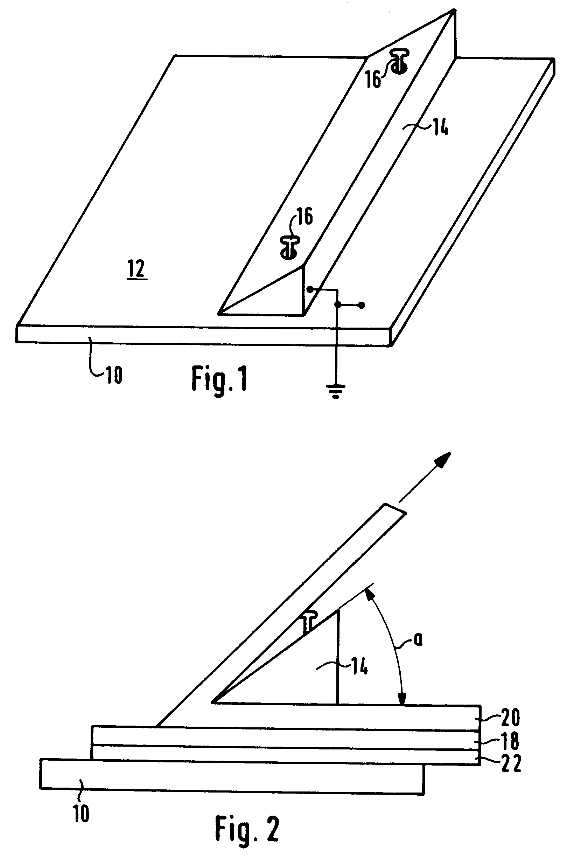

Die in Figur 1 dargestellte Vorrichtung umfaßt eine Grundplatte 10, die entweder aus Metall besteht oder zumindest an ihrer Oberseite eine elektrisch leitende Oberfläche 12 besitzt. Über der Oberfläche befindet sich eine Leiste 14, die vorzugsweise keilförmig gestaltet ist. Sowohl die Leiste als auch die Grundplattenoberfläche sind vorzugsweise elektrisch geerdet. Die Leiste ist mittels Stäben 16 an ihre beiden Enden (ortsfest quer) über der Platte 10 angeordnet. Die Stäbe 16 sind vorzugsweise zur Befestigung durch die Oberfläche der Grundplatte 10 hindurchgeführt und ragen vorzugsweise senkrecht aus Bohrungen in der Leiste heraus, so daß die Leiste an den Stäben auf- und abbewegt werden kann.

Die Grundplatte 10 ist vorzugsweise zwischen etwa 25 und etwa 200 cm lang, zwischen etwa 30 und etwa 75 cm breit und zwischen etwa 0,3 und etwa 2,5 cm dick und besteht vorzugsweise aus einem maßbeständigen, elektrisch leitenden Material, z.B. aus Kupfer, nichtrostendem Stahl oder Aluminium. Die Grundplatte 10 kann auch wärmeleitfähig eingestellt sein.

Ein wärmeleitfähiges Material wird bevorzugt dann verwendet, wenn das Auseinanderziehen von Schichtträger und transparenter Folie bei Raumtemperatur unmittelbar nach dem Laminieren durchgeführt werden soll. Die Wärmeleitfähigkeit trägt zu einem rascheren Absinken der Temperatur der Materialien bei, die man im allgemeinen bei höheren Temperaturen laminiert.

Die Leiste 14 ist vorzugsweise zwischen etwa 30 und etwa 80 cm lang, zwischen etwa 1 und etwa 15 cm breit und zwischen etwa 0,1 und etwa 2,5 cm dick und besteht vorzugsweise aus einem maßbeständigen, elektrisch leitenden Material, wie z.B. aus Kupfer, Aluminium oder nichtrostendem Stahl.

Ein wichtiges Merkmal der Leiste 14 besteht darin, daß der Winkel (a) auf der Abziehleiste kleiner als 45 °, vorzugsweise kleiner als 30 ° und insbesondere kleiner als 20 °, ist. Ausmasse der Grundplatte 10 sind größer als die der Leiste 14.

Der von der Leiste auf die Grundplatte ausgeübte Druck kann durch Federn, die z.B. die Stäbe umgeben, gesteuert werden. Wenn die Stäbe mit Einstellschrauben ausgerüstet sind, kann der Spalt zwischen Leiste 14 und Grundplatte 10, wie erforderlich, eingestellt werden.

Bei der in Figur 2 gezeigten Anwendung ist eine klebende und farbige lichtempfindliche Schicht, die mit der Bezugsziffer 18 bezeichnet ist, auf eine transparente Polyesterfolie 20 aufgebracht. Die beschichtete Folie wird auf ein Empfangsblatt 22 aufgelegt und dieser Sandwichaufbau durch den Walzenspalt eines Laminierwalzenpaares geführt.

Der Verbund wird dann zwischen Leiste 14 und Grundplatte 10 der Abziehvorrichtung eingeschoben. Die Folie 20 wird von Hand oder automatisch um die Spitze des Leistenwinkels (a) herumgeschlagen und abgezogen. Auf diese Weise wird die transparente Folie 20 von dem Empfangsblatt 22 getrennt, und gleichzeitig bleibt die klebende und farbige lichtempfindliche Schicht 18 aus lichtempfindlichen Material auf dem Empfangsblatt 22 zurück. Wenn man ohne die erfindungsgemäße Vorrichtung arbeitet, stellt man fest, daß es zu einer unerwünschten elektrostatischen Aufladung kommt und daß ein größerer Anteil an farbigem Material der Schicht 18 auf der transparenten Folie zurückbleibt.

Die erfindungsgemäße Vorrichtung kann für jedes Material verwendet werden, das aus einer Schicht im Kontakt mit einer flexiblen Schicht besteht. Mit Hilfe der Vorrichtung werden die beiden Schichten in einfacher und besserer Weise voneinander getrennt als durch Vorrichtungen der bekannten Art.

Für die praktische Durchführung des erfindungsgemäßen Verfahrens kann das Empfangsblatt 22 aus jedem geeigneten Material, wie polymeren Materialien, wie bevorzugt Polyester oder auch aus Cellulosematerialien und anorganischen Materialien, z.B. Aluminiumplatten oder Siliziumscheiben, bestehen. Die flexible Folie 20 kann ebenfalls aus flexiblen polymeren Materialien hergestellt sein. Die haftende Schicht kann sich tatsächlich aus mehreren Schichten zusammensetzen, von denen mindestens eine beispielsweise aus Schmelzklebern oder Haftklebern, Harzen als Bindemitteln, Farbmitteln und lichtempfindlichen Substanzen, wie z.B. photopolymerisierbaren Gemischen, lichthärtbaren Gemischen, o-Chinondiaziden und Diazoniumsalzen in den bekannten mengenmäßigen Anteilen bestehen kann.

## Patentansprüche

1. Vorrichtung zum Trennen von aneinander haftendem oder anliegendem Folienmaterial durch Abziehen von einander, bestehend aus einer, mindestens auf ihrer Oberfläche (12) elektrisch leitenden Grundplatte (10) und einer quer über dieser Oberfläche angeordneten, elektrisch leitenden Leiste (14), sowie Mitteln (16), mit denen die Leiste in ihrer Lage über der Oberfläche gehalten wird, wobei das Folienmaterial zwischen Leiste und Oberfläche geführt wird.

2. Vorichtung nach Anspruch 1, dadurch gekennzeichnet, daß die Grundplatte (10) mindestens an ihrer Oberfläche und die Leiste (14) geerdet sind.

3. Vorrichtung nach Anspruch 1, dadurch gekennzeichnet, daß die Grundplatte (10) im wesentlichen eben ausgebildet ist.

4. Vorrichtung nach Anspruch 1, dadurch gekennzeichnet, daß die Leiste (14) keilförmig gestaltet ist.

5. Vorrichtung nach Ansprüchen 1 und 4, dadurch gekennzeichnet, daß die keilförmige Leiste (14) mit der Oberfläche der Grundplatte (10) einen Winkel von unter 45° bildet.

6. Vorrichtung nach Anspruch 1, dadurch gekennzeichnet, daß als Mittel (16) zum Halten der Leiste (14) Stäbe vorhanden sind, die durch die Grundplatte (10) hindurchgeführt sind und aus den Bohrungen der Leiste (14) herausragen.

7. Vorrichtung nach Anspruch 6, dadurch gekennzeichnet, daß die Stäbe mit Schrauben versehen sind, mit deren Hilfe der Abstand der Leiste (14) von der Oberfläche (12) eingestellt wird.

8. Vorrichtung nach Ansprüchen 6 und 7, dadurch gekennzeichnet, daß die Stäbe zusätzlich mit Federn versehen sind.

9. Verfahren zum Trennen von aneinander haftendem oder anliegendem Folienmaterial durch Abziehen voneinander durch Führen des Folienmaterials durch einen Spalt, der von einer elektrisch leitenden Oberfläche einer Grundplatte und einer elektrisch leitenden Leiste gebildet wird, wobei beim Abziehen der Materialien voneinander gleichzeitig die während des Abziehschrittes erzeugte elektrostatische Aufladung durch Erden von Grundplatte und Leiste abgeleitet wird.

## Claims

1. Apparatus for the peel-apart separation of film materials adhering to or in contact with one another, comprising a base plate (10) which is electroconductive, at least on its surface (12), and an electroconductive strip (14) arranged transversely above this surface, and means (16) by means of which the strip is held in its position above the surface, the film material being passed between the strip and the surface.

2. Apparatus according to Claim 1, characterized in that the base plate (10) and the strip (14) are earthed, the former at least on its surface.

3. Apparatus according to Claim 1, characterized in that the base plate (10) is essentially planar.

4. Apparatus according to Claim 1, characterized in that the strip (14) is wedge-shaped.

5. Apparatus according to Claims 1 and 4, characterized in that the wedge-shaped strip (14) forms an angle of less than 45° with the surface of the base plate (10).

6. Apparatus according to Claim 1, characterized in that the means (16) for holding the strip (14) are rods passed through the base plate (10) and projecting from the holes in the strip (14).

7. Apparatus according to Claim 6, characterized in that the rods are provided with screws with the aid of which the distance of the strip (14) from the surface (12) is adjusted.

8. Apparatus according to Claims 6 and 7, characterized in that the rods are additionally provided with springs.

9. Process for the peel-apart separation of film materials adhering to or in contact with one another by passing the film material through a gap formed by an electroconductive surface of a base plate and an electroconductive strip where, during the peeling apart of the materials, the electrostatic charge generated during the peel step is simultaneously dissipated by earthing the base plate and the strip.

## Revendications

1. Dispositif de séparation par pelage de feuilles adhérant les unes aux autres ou superposées, constitué d'une plaque de base (10) électriquement conductrice au moins sur sa surface (12), et d'une baguette (14) électriquement conductrice disposée transversalement sur cette surface, ainsi que de moyens (16) grâce auxquels la baguette est maintenue dans sa position sur la surface, le matériau en feuilles étant guidé entre la baguette et la surface.

2. Dispositif suivant la revendication 1, caractérisé en ce que la plaque de base (10), au moins sur sa surface, et la baguette (14) sont mises à la terre.

3. Dispositif suivant la revendication 1, caractérisé en ce que la plaque de base (10) est essentiellement plane.

4. Dispositif suivant la revendication 1, caractérisé en ce que la baguette (14) a la forme d'un coin.

5. Dispositif suivant les revendications 1 et 4, caractérisé en ce que la baguette (14) en forme de coin forme avec la surface de la plaque de base (10) un angle inférieur à 45°.

6. Dispositif suivant la revendication 1, caractérisé en ce que, en tant que moyens (16) de maintien de la baguette (14), il est prévu des tiges qui traversent la plaque de base (10) et font saillie à travers les perçages de la baguette (14).

7. Dispositif suivant la revendication 6, caractérisé en ce que les tiges sont pourvues de vis à l'aide desquelles la distance entre la baguette (14) et la surface (12) est réglée.

8. Dispositif suivant les revendications 6 et 7, caractérisé en ce que les tiges sont en outre équipées de ressorts.

9. Procédé de séparation par pelage de feuilles adhérant les unes aux autres ou superposées, par guidage de la matière en feuilles à travers un intervalle formé par une surface électriquement conductrice d'une plaque de base et une baguette électriquement conductrice, la charge électrostatique formée pendant le pelage étant simultanément, lors du pelage des feuilles, évacuée par mise à la terre de la plaque de base et de la baguette.
